**Europäisches Patentamt**

**European Patent Office**

**Office européen des brevets**

(19)

(11) Numéro de publication : **0 437 502 B1**

(12) **FASCICULE DE BREVET EUROPEEN**

(45) Date de publication du fascicule du brevet :
**11.08.93 Bulletin 93/32**

(51) Int. Cl.$^5$ : **C02F 1/34,** C02F 1/32

(21) Numéro de dépôt : **89911575.2**

(22) Date de dépôt : **05.10.89**

(86) Numéro de dépôt international :
**PCT/FR89/00513**

(87) Numéro de publication internationale :
**WO 90/03946 19.04.90 Gazette 90/09**

(54) **PROCEDE DE TRAITEMENT DE L'EAU PAR SYNERGIE DE LA REACTIVATION AVEC LA CAVITATION.**

(30) Priorité : **07.10.88 FR 8813606**

(43) Date de publication de la demande :
**24.07.91 Bulletin 91/30**

(45) Mention de la délivrance du brevet :
**11.08.93 Bulletin 93/32**

(84) Etats contractants désignés :
**AT BE CH DE FR GB IT LI LU NL SE**

(56) Documents cités :
**CH-A- 457 302**
**DE-A- 2 636 094**
**FR-A- 2 142 589**
**FR-A- 2 589 460**

(73) Titulaire : **MOISAN, Jacky**
**Le Bas-Châtel**
**F-35550 Pipriac (FR)**

(72) Inventeur : **MOISAN, Jacky**
**Le Bas-Châtel**
**F-35550 Pipriac (FR)**

(74) Mandataire : **Barre, Philippe**
**Cabinet Barre-Gatti-Laforgue 95 rue des**
**Amidonniers**
**F-31069 Toulouse Cédex (FR)**

## Description

La présente invention concerne un procédé de traitement de l'eau capable de modifier, en les renforçant, ses caractéristiques électromagnétiques et, ce faisant, permettant l'utilisation de cette eau réactivée pour des applications de transfert d'énergie sur :
- des substrats vivants (êtres humains, animaux, végétaux...),
- des substrats inertes (minéraux, ...).

Ce transfert d'énergie permet ensuite la réactivation vitale fondamentale renforçant par là-même les potentiels physiques, psychiques et mentaux de la substance vivante concernée.

Il existe divers procédés de traitement de l'eau dont nous retiendrons, entre autres, d'une part le procédé de "cavitation" qui agit par brutales variations de pression hydrodynamique à travers un effet de Venturi, et d'autre part le procédé de "réactivation" qui procède par photonisation de l'eau soit par utilisation de l'effet Compton, soit tel que décrit dans le brevet DE 2.636.094, par l'utilisation d'un rayonnement laser permanent.

La présente invention a pour objet d'utiliser en les couplant les procédés de cavitation et de réactivation, et vise un procédé de traitement de l'eau se caractérisant en ce qu'il associe, soit simultanément, soit en série, deux types de traitement, l'un assumant une régénération de l'eau par cavitation hydrodynamique, l'autre assurant, sur l'eau préalablement cavitée, une réactivation photonique, obtenue par des flux photoniques fréquentiels.

Un tel procédé permet, de façon inattendue, d'obtenir un effet de synergie énergétique par résonance renforçant les caractéristiques de l'eau ainsi traitée.

Préalablement, il convient d'exposer le rôle de l'eau dans le phénomène de la vie, qui permet de très souvent l'utiliser comme un moyen thérapeutique. Il apparaît, toutefois, que la structure de l'eau joue un rôle prépondérant dans son activité thérapeutique.

L'eau liquide est en phase aqueuse, car composée de molécules de diverses tailles, allant de monomolécules, jusqu'aux blocs plurimoléculaires. Les propriétés physico-chimiques de l'eau, fortement conditionnées par cette structure complexe, sont très sensibles aux facteurs susceptibles de modifier cet équilibre dynamique, caractérisé en particulier par la force de la liaison H-OH (cf. méthode d'investigation par spectrométrie dite "RAMAN-LASER").

La présente invention consiste à utiiiser en synergie les facteurs modifiant les propriétés classiques de l'eau par la cavitation et la réactivation photonique qui sont de nature à déclencher des réactions électromagnétiques accompagnées d'une libération d'énergie utilisable à des fins thérapeutiques.

Convenablement stimulée par les effets cavitation et réactivation, la molécule H-OH, structure fondamentaie de la vie, devient un "micro-générateur" hyperfréquences Fonctionnant en oscillateur. En effet :

a) La réactivation photonique consiste à soumettre l'eau, photosensible, à un flux lumineux fréquentiel correctement adapté en puissance, longueur d'onde et fréquence. Les photons incidents déclenchent une réaction électromagnétique au niveau atomique et moléculaire par effet Compton avec pompage optique :

. déformation des orbitales électroniques et réorganisation de la molécule H-OH dans son nouvel état d'équilibre dynamique instable,

. variation du moment dipolaire (H-OH) qui permet au dipôle moléculaire de passer à un état dynamique (oscillation des moments électriques) générateur d'énergie.

La molécule d'eau devient un oscillateur, restituant son énergie par relaxation par rayonnement non ionisant (RNI) caractérisé dans sa Fréquence N1 et sa longueur d'onde $\lambda 1$ par la relation :

$$\lambda 1 = \frac{C}{N1}$$

avec C : vitesse de la lumière

b) La cavitation est un phénomène physique basé sur de brutales variations de pression hydrodynamiques qui à travers un Venturi permet l'apparition de micro ou de macro-cavités qui implosent avec des effets soniques.

Ce procédé, dans le cadre du thermalisme, a été utilisé et développé par des chercheurs de l'Institut CREEP de REDON. L'eau à travers un injecteur hydrodynamique recrée me phénomène naturel de la cavitation. Le jet ainsi obtenu composé de cavités gazeuses pénètre une masse d'eau statique. Les microcavités gazeuses se répartissent dans l'eau, remontent en surface et par implosion créent des microjets et libèrent des aérosions négatifs.

Dans l'eau se manifestent alors des échauffements thermiques et une sonoluminescence qui sont la preuve de réactions électeomagnétiques au niveau de la structure physico-chimique.

Il est donc possible, comme dans le cas de la réactivation, de déterminer une fréquence vibratoire N2 et une longueur d'onde $\lambda 2$ liées par la formule :

$$\lambda 2 = \frac{C}{N2}$$

La présente invention, qui associe étroitement les deux procédés cités, permet :
- la création d'une synergie énergétique nouvelle de l'eau,
- l'utilisation de phénomènes physicochimiques tendant à purifier bactériologiquement l'eau pour certaines applications.

En effet :

. l'énergie de réactivation photonique se manifeste selon les formules d'Einstein et de Plank :

$$E1 = m1 . C^2 = k.N 1 = h \frac{C}{\lambda 1}$$

(avec h : constante de Plank)

. il en est de même pour la cavitation :

$$E2 = m2 . C^2 = k N 2 = h \frac{C}{\lambda 1}$$

La synergie cavitation/réactivation, qui utilise des fréquences vibratoires harmoniques N 1 = (2k + 1) N 2, procède à un transfert forcé d'énergie par effet de résonance électromagnétique créant ainsi une énergie hydrodynamique nouvelle E3.

Les caractéristiques de l'eau en sont changées, tels que me confirment les tests effectués au Raman Laser et en relaxation diélectrique.

L'eau ainsi traitée, par association des procédés précités, est une eau possédant une structure ainsi que des propriétés physico-chimiques nouvelles, utilisables pour des applications liées au rythme vital.

Avant de décrire une application du procédé objet de l'invention, il est nécessaire d'aborder le mécanisme de transfert énergétique de l'eau cavitée/réactivée à la cellule vivante caractérisant la vie.

Les rayonnements électromagnétiques ainsi induits ont un caractère "non ionisant" et donc non destructeur de la cellule vivante, par opposition avec les rayonnements ionisants (X, $\gamma$, neutrons, particules, ...). Ces rayonnements permettent d'établir un régime oscillatoire résonnant entre le système cavitation/réactivation avec l'eau ainsi traitée et l'eau structurelle de la cellule vivante, exerçant par là-même une induction énergétique sur la structure dynamique de la cellule vivante.

La perturbation cellulaire résulte donc, en premier lieu, d'une rupture de son équilibre dynamique entraînant une modification de sa valeur fonctionnelle.

La régénération de la cellule suppose le rétablissement de l'équilibre par une action radiante sur sa structure de base constituée par l'eau.

Pour un être vivant, l'ensemble de l'édifice hydrique est en équilibre dynamique par un ensemble d'oscillations moléculaires couplées (H-OH)n, et constitue un élément régulateur et modulateur énergétique.

La régénération de la cellule nécessite la restauration de l'ensemble des oscillations moléculaires couplées (OH-H)n, par irradiation, établissant un régime oscillatoire résonnant entre la masse d'eau traitée et les tissus vivants. Il s'agit d'un transfert d'énergie vibratoire d'ondes électromagnétiques entre deux systèmes possédant des fréquences harmoniques de résonance (couplage entre systèmes vibratoires actifs).

Il convient de souligner ici l'importance de réglage de la fréquence des flashs d'activation de l'eau, afin de l'harmoniser, d'une part avec l'instant présent et d'autre part avec me substrat vivant qui doit être en contact résonnant avec l'eau traitée. A cet effet, l'on peut considérer que les deux phénomènes utilisés dans la présente invention sont des phénomènes existant dans la nature :

- l'eau de source a des propriétés électromagnétiques communiquées à partir des énergies cosmiques et solaires captées par le sol par transferts radiatifs. Elle perd rapidement ses qualités dès qu'elle n'est plus soumise à ces synchroniseurs extérieurs en revenant à un état d'équilibre thermique. L'activité dynamique de l'eau varie en fonction du milieu "synchronisant" (activité électromagnétique et nature des terrains et des milieux traversés). Il s'agit de phénomènes naturels liés à la réactivation de l'eau ;

- dans les masses d'eau en mouvement (courants marins et fluviaux, cascades, jaillissements de sources, ...), en fonction des équilibres vitesse/pression peuvent apparaître des cavités (bulles en phase vapeur) qui implosent, créant des microjets à forte pression et des aéroions négatifs indispensables et bénéfiques à l'équilibre biologique terrestre. Il s'agit de phénomènes naturels liés à la cavitation.

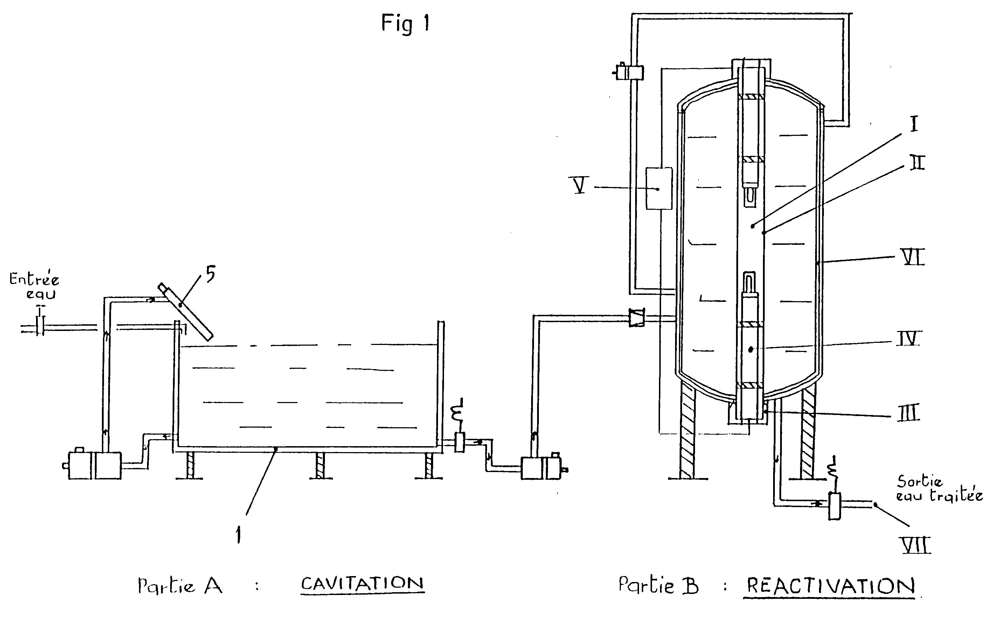

Dès lors, la présente invention consiste, suivant la figure 1, à associer en série la cavitation et la réactivation de l'eau pour obtenir une synergie hydrodynamique dont les propriétés spécifiques acquises sont nouvelles et ont des applications des plus diverses, en particulier l'activité dynamique, sont utilisabies bénéfiquement en biologie, biochimie et biophysique.

L'installation décrite ci-après constitue un exemple d'application de l'invention. Le système décrit est un modèle non limitatif adaptable à un centre de bain, permettant d'intégrer les qualités de l'eau traitée dans :

- les applications thérapeutiques (maladies neurovégétatives, psychosomatiques, régénération cellulaire, ...),
- les applications en esthétique, balnéothérapie (relaxation, remise en forme, ...).

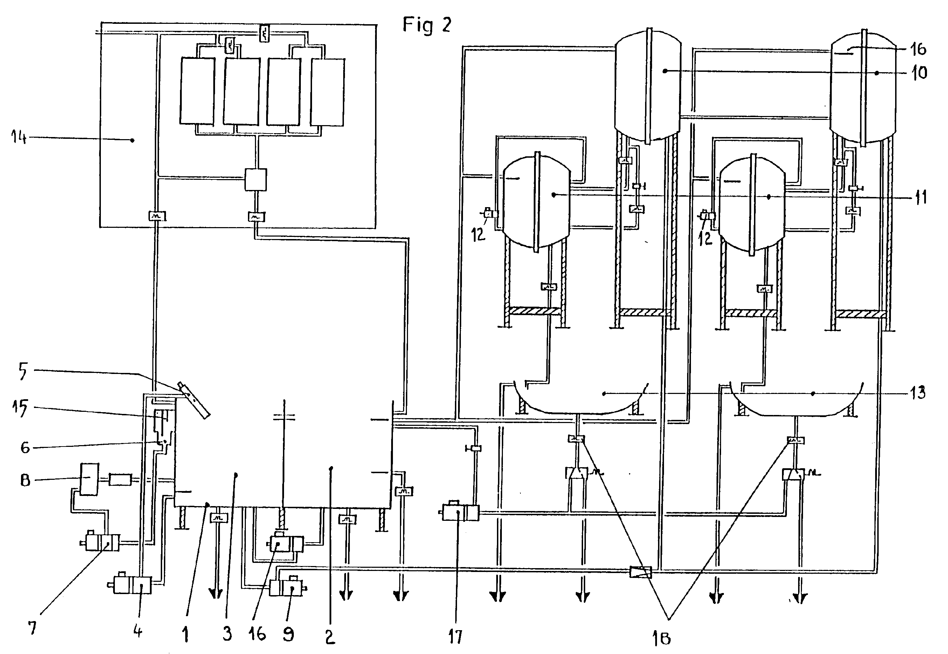

La figure 2 constitue un schéma d'un type d'installation réalisé.

La partie A est l'ensemble de cavitation et la partie B constitue la réactivation photonique, ainsi que les cabines de bains par immersion permettant l'utilisation de l'eau traitée.

La partie A cavitation comprend une cuve 1 en polyester qui peut être divisée en une zone de décantation 2 et une zone de traitement par cavitation 3. la forme géométrique de cette cuve dimensions et forme (parallélépipède, sphère, ...), ainsi que sa couleur, peuvent être adaptées aux fins d'optimiser les transferts des diverses formes de vibrations énergétiques (vibrations électromagnétiques, cosmiques, ...). la température de l'eau contenue dans la cuve 1 est régulée à un niveau réglable. A cet effet, l'eau à traiter est préchauffée et sa température maintenue thermostatiquement par un apport régulé d'eau froide.

Le circuit de cavitation est quant à lui constitué par un circuit comportant une pompe de cavitation 4 qui injecte sous pression l'eau dans un injecteur hydrocynétique 5 constituant l'organe de la cavitation. Il peut être disposé plusieurs injecteurs hydrocynétiques sur une même cuve afin de renforcer le transfert énergétique, ainsi que le traitement biologique de l'eau (oxygénation, purification).

Par ailleurs, les niveaux d'eau sont régulés et/ou le transfert de l'eau entre chacune des parties 2 et 3 est assuré, par exemple, par une pompe 16, et le plan d'eau dans la zone de cavitation est positionné par rapport à la (aux) sortie(s) de (des) l'injecteur(s) hydrodynamique(s), par exemple, par un contact de niveau 15.

Le jet d'eau cavité qui pénètre angulairement dans la masse de l'eau est composé des cavités gazeuses qui induisent des réactions électromagnétiques manifestées par des échauffements thermiques et une sonoluminescence.

En outre, la cavitation permet une amélioration de la purification biologique de l'eau, et élimine les déchets microscopiques qui forment des floculats filtrés par un circuit secondaire de filtration à travers un skimmer 6, une pompe de circulation 7 et un filtre 8 de retenue desdits floculats.

L'activation énergétique de l'eau obtenue par la cavitation peut être renforcée dans certains cas par d'autres formes d'émetteurs tels que générateurs ultrasoniques.

L'eau de cavitation ainsi traitée, est envoyée dans la partie B de réactivation photonique par la pompe 9. la réactivation est constituée d'éléments électriquement isolants afin d'éviter des transferts externes d'énergie vibratoire.

Cette partie B est principalement constituée de deux groupes de cuves, 10 et 11 ayant chacune dans le cas de centres de bains un volume sensiblement égal à celui de la baignoire de traitement. Chacune de ces cuves (cf. figure 1) est traversée par une colonne comprenant un tube d'émission photonique I. Cette colonne, dans le cas qui est décrit, comprend un tube transparent en plexiglas II, un support III en PVC du tube d'impulsions photoniques IV, centré par des collerettes. Les caractéristiques de ce tube d'impulsions, fonction de la nature et de la pression du gaz rare contenu dans le tube, sont choisies afin de générer un spectre optique dont l'étendue, la puissance de crête, la fréquence impulsionnelle sont de nature à déclencher par effet Compton une réaction électromagnétique d'activation énergétique de l'eau afin que la molécule (H-OH) devienne un "micro-générateur" d'hyperfréquences. En outre, la fréquence impulsionnelle correspond au rythme vital, afin de respecter les plages de résonance qui peuvent d'ailleurs être adaptées dans chaque de traitement.

Dans le cas qui nous occupe, la section excitatrice se situe dans le violet, la fréquence impulsionnelle est d'environ 60/mn (réglable par boîtier V). Le temps d'activation et sa puissance sont choisis en fonction du volume d'eau à traiter afin d'atteindre le seuil de saturation électromagnétique.

Le transfert de l'eau de la cuve de cavitation est assuré par exemple par une pompe hydraulique 9 pour la cuve de préréactrvation 10, puis, par gravité pour les autres cuves de réactivation photonique 11, suivant un système régulé à partir de la consommation de l'eau traitée et comprenant des vannes pneumatiques, des clapets anti-retour, des contacts de niveau, ainsi qu'un trop plein de retour dans chaque cuve de préréactivation et de réactivation.

L'un des groupes de cuves 10 est un groupe de préréactivation considérée comme un stockage énergétique, alimenté régulièrement à intervalles de temps réglables par de l'eau cavitée. L'autre groupe de cuves 11 est un groupe d'activation énergétique avant son utilisation dans le bain. Chaque cuve de ce dernier groupe peut être équipée d'une pompe 12 assurant une rotation de la masse d'eau, dans le sens des aiguilles d'une montre par rapport à l'axe du tube photonique afin d'améliorer l'absorption électromagnétique.

Dans ce cas, comme pour la cuve de cavitation, la forme, la couleur, les dimensions sont adaptées aux fins d'optimiser les transferts énergétiques pour une application donnée. En particulier, la paroi interne des cuves VI peut être recouverte d'une couche de paillettes réfléchissantes permettant par multi-réflexions une concentration de l'énergie lumineuse.

La cabine de bain monobloc 13 en fibre de verre, est adaptée dimensionnellement, et comporte une baignoire fonctionnelle permettant une immersion du patient pendant sensiblement 30 minutes. Après l'utilisation, l'eau est renvoyée pour recyclage dans la cuve de cavitation 1, ou de décantation préalable 2, par exemple par une pompe 17 actionnée après ouverture d'une vanne 18 et après expiration de la durée du bain.

Un système complet :
- de liaisons hydrauliques,
- de régulation de température, de niveaux de l'eau,
- de pilotage programmé de l'installation, permet d'assurer dans ce cas le fonctionnement d'un centre de bain intégré, avec en particulier (à titre d'exemple) :
  . dispositif d'alimentation 14 en eau chaude à 37° C pour remplissage du circuit. Un robinet thermostatique assure la régulation de cette température. Un palpeur de contact assure un contrôle du niveau et coupe le circuit 16 et l'alimentation en eau,
  . les pompes 4 et 16 permettent pendant un temps déterminé (30 min minimum pour 600 litres) de caviter le volume compris dans la cuve 1,

. pompe 9 pour le remplissage des enceintes 10 et 11 de préréactivation et d'activation. Le contact niveau haut 19 sur 10 coupe l'alimentation de ces enceintes,

. après un temps déterminé de réactivation photonique, l'eau traitée est prête pour son utilisation. Après bain (environ 30 min), la pompe 17 assure le transfert eau baignoire/bac 2,

. un système de vannes pneumatiques isole les divers circuits et sont programmées en fonction du déroulement du cycle de traitement,

. en temps de repos (non utilisation des bains) une circulation permanente de l'eau par gravité entre la zone activation et cavitation permet le maintien du niveau énergétique de la masse globale,

. une mise à l'égout est prévue pour la vidange globale ou pour l'évacuation de l'eau de nettoyage des cabines de bain ou des diverses cuves.

L'ensemble du cycle de fonctionnement et de traitement est séquencé à partir d'une armoire électrique à relais temporisés actionnant, à partir d'un système de programmation (horloge programmable ou microprocesseur), les diverses composantes du circuit de traitement de l'eau (pompes, vannes, ... ).

Un des autres avantages de la cavitation réside, dans ce cas, dans le maintien de la température par les phénomènes d'échauffements thermiques générés par le procédé.

La figure 1 est une représentation du schéma général du procédé objet de l'invention, avec :

- partie A : système de cavitation hydrodynamique. Entrée.
- partie B : système de réactivation photonique. Sortie.

Il est à noter que l'activation énergétique peut en outre être renforcée par d'autres systèmes d'émission énergétique tels qu'un (ou plusieurs) générateur(s) ultrasonique(s) dont la fréquence et le spectre d'impulsions sont choisis pour être harmoniques avec les spectres vibratoires de l'injecteur hydrodynamique et/ou des tubes photoniques, afin de favoriser le régime de transfert d'énergie vibratoire dans l'eau à traiter.

Après réactivation finale, l'eau traitée est utilisable pour des applications diverses, dont une énumération non exhaustive est donnée ci-après :

- régénération des eaux de consommation ou de traitement,
- régénération atmosphérique par utilisation de l'eau traitée par diffusion/brumisation dans l'air,
- applications thérapeutiques (maladies neurovégétatives, psychosomatiques, osthéopatie, revitalisation, régénératron cellulaire, ...),

- applications en esthétique, balnéothérapie, ...

Pour ces diverses applications peuvent être développés des appareillages de traitement adaptés : baignoires de bains, brumisateurs/diffuseurs, tables de traitement, inhalateurs, ... Ainsi l'eau peut être envoyée dans un embout VII pour un traitement localisé permettant de traiter, soit des substrats vivants (humain, animal, végétal) pour des applications dans les domaines médicaux, biotechnologies, agriculture, esthétique, soit des substrats inertes (solides, liquides ou vapeurs). Le contact direct eau traitée/être humain ou corps vivant à traiter n'étant pas obligatoire pour certaines applications.

## Revendications

1. Procédé de traitement de l'eau caractérisé en ce qu'il associe, soit simultanément, soit en série, deux types de traitement, l'un assumant une régénération de l'eau par cavitation hydrodynamique, l'autre assurant, sur l'eau préalablement cavitée, une réactivation photonique, obtenue par des flux photoniques fréquentiels.

2. Procédé selon la revendication 1, où la cavitation est assurée par au moins un injecteur hydrodynamique (5) dont le jet est disposé angulairement par rapport à la surface de l'eau à traiter contenue dans une cuve (1), ou par tout autre système de cavitation, caractérisé en ce que l'eau ainsi cavitée, durant un temps fonction du volume à traiter, est envoyée dans au moins une cuve de réactivations photonique (VI) équipée d'au moins un tube ou dispositif d'impulsions photoniques (IV) dont les caractéristiques de spectre, de puissance, de fréquence et de durée minimale d'émission, sont adaptées au volume d'eau à traiter, à la nature de l'utilisation de l'eau traitée, ainsi qu'à des paramètres, s'agissant de substrats vivants, liés à la personnalité de ce substrat.

3. Procédé selon la revendication 2, caractérisé en ce que l'on utilise une cuve de cavitation (1) réalisée en un matériau électriquement isolant tel que polyester.

4. Procédé selon les revendications 1 et 2, mettant en oeuvre la cuve de cavitation selon la revendication 3, caractérisé en ce que la cuve de cavitation (1) comprend deux parties (2) et (3), dont l'une est destinée à une décantation préalable de l'eau et l'autre à sa cavitation, les niveaux d'eau étant régulés et/ou le transfert de l'eau entre chacune des parties (2) et (3) étant assuré, par exemple, par une pompe (16), et le plan d'eau dans la zone de cavitation étant positionné par rapport à chaque sortie d'injecteur hydrodynamique, par exemple, au moyen d'un contact de niveau (15).

5. Procédé selon les revendications 1 et 2, caractérisé en ce que l'injecteur hydrodynamique (5) est alimenté en circuit fermé sous pression par rapport à la cuve de cavitation, par exemple par une pompe hydraulique (4).

6. Procédé selon les revendications 1 et 2, caractérisé en ce qu'il comporte la récupération des floculats pouvant naître du traitement de certaines eaux ou après leur utilisation, au moyen d'un système hydraulique ou mécanique disposé dans la cuve de cavitation.

7. Procédé selon la revendication 2 comprenant une cuve de cavitation (1), caractérisé en ce que la température de l'eau contenue dans ladite cuve est régulée à un niveau réglable.

8. Procédé selon la revendication 7, caractérisé en ce que l'eau à traiter est préchauffée et sa température maintenue thermostatiquement par un apport régulé d'eau froide.

9. Procédé selon la revendication 2, caractérisé en ce que l'on utilise une cuve de réactivation photonique (VI) réalisée en un matériau électriquement isolant tel que fibre de verre.

10. Procédé selon les revendications 1 et 2, caractérisé en ce que la réactivation photonique de l'eau est assurée dans plusieurs cuves successives de réactivation (10) et (11) avec transfert de l'eau de l'une à l'autre permettant d'effectuer une préréactivation (10), puis une réactivation (11) photonique avant l'utilisation de l'eau traitée pour l'application considérée.

11. Procédé selon la revendication 10, caractérisé en ce que l'eau contenue dans la ou les cuves de préréactivation (10), provient de la cuve de cavitation (1) et a été préalablement soumise à un traitement de cavitation hydrodynamique.

12. Procédé selon la revendication 11, caractérisé en ce que le transfert de l'eau de la cuve de cavitation est assuré par exemple par une pompe hydraulique (9) pour la cuve de préréactivation (10), puis, par gravité pour les autres cuves de réactivation photonique (11), suivant un système régulé à partir de la consommation de l'eau traitée et comprenant des vannes pneumatiques, des clapets anti-retour, des contacts de niveau, ainsi qu'un trop plein de retour dans chaque cuve de préréactivation et de réactivation.

13. Procédé selon l'une quelconque des revendications précédentes, caractérisé en ce que l'eau traitée par cavitation hydrodynamique et par réactivation photonique est envoyée dans au moins une baignoire (13) aux fins d'utilisation pour des bains par immersion du corps humain ou animal, et/ou après utilisation est renvoyée pour recyclage dans la cuve de cavitation (1), ou de décantation préalable (2), par exemple par une pompe (17) actionnée après ouverture d'une vanne (18) et après expiration de la durée du bain.

14. Procédé selon l'une quelconque des revendications précédentes, caractérisé en ce que l'ensemble du cycle de fonctionnement et de traitement est séquencé à partir d'une armoire électrique à relais temporisés actionnant, à partir d'un système de programmation (horloge programmable ou micro-processeur), les diverses composantes du circuit de traitement de l'eau (pompes, vannes, ...).

15. Procédé selon l'une quelconque des revendications précédentes, caractérisé en ce qu'à partir de la réactivation photonique le circuit hydraulique est constitué uniquement de matériaux électriquement isolants.

16. Procédé selon les revendications 1 et 2, dans lequel chaque cuve de cavitation (1) est équipée d'un injecteur hydrodynamique (5), et chaque cuve de réactivation (10) et (11) est équipée d'au moins un tube photonique (II), caractérisé en ce que l'activation énergétique est renforcée par d'autres systèmes d'émission énergétique tels qu'au moins un générateur ultrasonique dont la fréquence et le spectre d'impulsions sont choisis pour être harmoniques avec les spectres vibratoires de l'injecteur hydrodynamique, et/ou des tubes photoniques, afin de favoriser le régime de transfert d'énergie vibratoire dans l'eau à traiter.

17. Procédé selon l'une quelconque des revendications précédentes, caractérisé en ce que l'eau traitée par cavitation hydrodynamique et par réactivation photonique est envoyée, soit dans un dispositif de vaporisation, soit dans une table d'exposition (sujet ou substance à traiter non en contact avec l'eau), soit dans un dispositif d'immersion, soit dans un embout (VII) pour un traitement localisé permettant de traiter, soit des substrats vivants (humain, animal, végétal) pour des applications dans les domaines médicaux, biotechnologies, agriculture, esthétique, soit des substrats inertes (solides, liquides ou vapeurs).

**Patentansprüche**

1. Verfahren zur Behandlung von Wasser, dadurch gekennzeichnet, daß man entweder gleichzeitig oder nacheinander zwei Behandlungsarten verbindet, und zwar eine, die Aufbereitung des Wassers durch hydrodynamische Kavitation voraussetzt, und eine, die bei dem zuvor kavitierten Wasser eine durch frequentielle photonische Flüsse bewirkte photonische Reaktivierung gewährleistet.

2. Verfahren nach Anspruch 1, bei dem die Kavitation durch mindestens eine hydrodynamische Spritzvorrichtung (5) gewährleistet wird, deren Strahl im Verhältnis zu der Oberfläche des zu behandelnden Wassers in einem Behälter (1) schräg verläuft, oder durch ein beliebiges anderes Kavitationssystem, dadurch gekennzeichnet, daß das auf diese Weise kavitierte Wasser während einer von der zu behandelnden Menge abhängigen Zeitspanne in mindestens einen Behälter für photonische Reaktivierung (VI) überführt wird, wobei der besagte Behälter für photonische Reaktivierung mit mindestens einer Photoimpulsröhre oder -vorrichtung (IV) ausgestattet ist, deren Eigenschaften in bezug auf Spektrum, Leistung, Frequenz und Mindestemissionsdauer an die behandelnde Wassermenge angepaßt sind, sowie an die Art der Verwertung des behandelten Wassers und an Parameter, die bei lebenden Substraten mit der Individualität des besagten Substrats in Verbindung stehen.

3. Verfahren nach Anspruch 2, dadurch gekennzeichnet, daß man von einem Kavitationsbehälter (1) aus einem elektrisch isolierenden Material wie Polyester Gebrauch macht.

4. Verfahren nach den Ansprüchen 1 und 2 unter Einsatz des Kavitationsbehälters nach Anspruch 3, dadurch gekennzeichnet, daß Kavitationsbehälter (1) zwei Teile (2) und (3) umfaßt, von denen der eine für Vorklärung des Wassers und der andere für dessen Kavitation bestimmt ist, wobei zum Beispiel eine Pumpe (16) die Wasserstände regelt und/oder die Übertragung des Wassers zwischen den einzelnen Teilen (2) und (3) gewährleistet und der Wasserspiegel zum Beispiel mit Hilfe eines Füllstandkontakts (15) im Verhältnis zu jedem Ausgang der hydrodynamischen Spritzvorrichtung eingestellt wird.

5. Verfahren nach den Ansprüchen 1 und 2, dadurch gekennzeichnet, daß die hydrodynamische Spritzvorrichtung (5) im geschlossenen Kreislauf unter Druck im Verhältnis zu dem Kavitationsbehälter gespeist wird, zum Beispiel durch eine hydraulische Pumpe (4).

6. Verfahren nach den Ansprüchen 1 und 2, dadurch gekennzeichnet, daß es sich auf die Rückgewinnung von Flokkulaten erstreckt, die infolge der Behandlung gewisser Wasserarten oder nach deren Gebrauch entstehen können, und zwar mit Hilfe eines in dem Kavitationsbehälter angeordneten hydraulischen oder mechanischen Systems.

7. Verfahren nach Anspruch 2, bei dem ein Kavitationsbehälter (1) vorgesehen ist, dadurch gekennzeichnet, daß die Temperatur des in dem besagten Behälter enthaltenen Wassers auf einen regelbaren Pegel geregelt wird.

8. Verfahren nach Anspruch 7, dadurch gekennzeichnet, daß das zu behandelnde Wasser vorgewärmt und seine Temperatur thermostatisch durch geregelte Zufuhr von kaltem Wasser erhalten wird.

9. Verfahren nach Anspruch 2, dadurch gekennzeichnet, daß man von einem Behälter für photonische Reaktivierung (VI) aus einem elektrisch isolierenden Material wie Faserglas Gebrauch macht.

10. Verfahren nach den Ansprüchen 1 und 2, dadurch gekennzeichnet, daß die photonische Reaktivierung des Wassers in mehreren aneinander anschließenden Reaktivierungsbehältern (10) und (11) unter Übertragung des Wassers von dem einen zum anderen gewährleistet wird, so daß es möglich ist, eine Vorreaktivierung (10) und dann eine photonische Reaktivierung (11) vorzunehmen, bevor das behandelte Wasser für die betreffende Anwendung verwendet wird.

11. Verfahren nach Anspruch 10, dadurch gekennzeichnet, daß das in Vorreaktivierungsbehälter bzw. Vorreaktivierungsbehältern (10) enthaltene Wasser aus Kavitationsbehälter (1) bezogen wird und im voraus einer hydrodynamischen Kavitationsbehandlung unterzogen wurde.

12. Verfahren nach Anspruch 11, dadurch gekennzeichnet, daß die Übertragung des Wassers aus dem Kavitationsbehälter zum Beispiel durch eine hydraulische Pumpe (9) für Vorreaktivierungsbehälter (10) und danach bei den anderen Behältern für photonische Reaktivierung (11) durch Schwerkraft bewirkt wird, und zwar im Einklang mit einem aufgrund des Verbrauchs an behandeltem Wasser geregelten System, das pneumatische Ventile, Rückschlagventile, Füllstandkontakte sowie einen Rücklaufüberlauf in jedem Präreaktivierungs- und Reaktivierungsbehälter umfaßt.

13. Verfahren nach einem beliebigen der vorstehenden Ansprüche, dadurch gekennzeichnet, das das durch hydrodynamische Kavitation und photonische Reaktivierung behandelte Wasser zwecks Verwertung für Tauchbäder des menschlichen oder tierischen Körpers in mindestens ein Becken (13) übertragen wird und daß es nach Gebrauch zwecks Wiederumlauf in Kavitationsbehälter (1) oder Vorklärbehälter (2) zurückgeführt wird, zum Beispiel durch eine nach Öffnen eines Ventils (18) und nach Ablauf der Badezeit eingeschaltete Pumpe (17).

14. Verfahren nach einem beliebigen der vorstehenden Absprüche, dadurch gekennzeichnet, daß der gesamte Betriebs- und Behandlungszyklus von einer elektrischen Zentrale mit zeitgesteuerten Relais in Folge geschaltet wird, so daß aufgrund eines Programmiersystems (programmierbare Uhr oder Mikroprozessor) die verschiedenen Teile des Wasserbehandlungskreises (Pumpen, Ventile...) betätigt werden.

15. Verfahren nach einem beliebigen der vorstehenden Ansprüche, dadurch gekennzeichnet, daß von der photonischen Reaktivierung an der Hydraulikkreis ausschließlich aus elektrisch isolierenden Materialien besteht.

16. Verfahren nach den Ansprüchen 1 und 2, bei dem jeder Kavitationsbehälter (1) mit einer hydrodynamischen Spritzvorrichtung (5) ausgestattet und in jedem Reaktivierungsbehälter (10) und (11) mindestens ein photonisches Rohr (II) vorgesehen ist, dadurch gekennzeichnet, daß die energetische Aktivierung durch andere Energieabgabesysteme verstärkt wird; wie zum Beispiel mindestens einen Ultraschallgenerator, dessen Frequenz und Impulsspektrum so gewählt werden, daß sie mit den Schwingungsspektren der hydrodynamischen Spritzvorrichtung harmonisieren, und/oder photonische Röhren, um das Maß der Schwingungsenergieübertragung in dem zu behandelnden Wasser zu verbessern.

17. Verfahren nach einem beliebigen der vorstehenden Ansprüche, dadurch gekennzeichnet, daß das durch hydrodynamische Kavitation und durch photonische Reaktivierung behandelte Wasser entweder in eine Verdampfungsvorrichtung oder in einen Einwirktisch (zu behandelndes Objekt oder zu behandelnder Stoff nicht in Berührung mit dem Wasser) oder in eine Eintauchvorrichtung oder in ein Mundstück (VII) zwecks örtlicher Behandlung geleitet wird, so daß entweder lebende Substrate (menschlich, tierisch, pflanzlich) im Zusammenhang mit Anwendungen auf den Sektoren Medizin, Biotechnologie, Landwirtschaft und Ästhetik oder inerte Substrate (fest, flüssig oder dampfförmig) behandelt werden können.

## Claims

1. Process for treating water characterised in that it combines, at the same time or in series, two types of treatment, one presupposing regeneration of the water by hydrodynamic cavitation while the other ensures, in respect of the previously cavitated water, photonic reactivation achieved by means of frequential photonic flows.

2. Process according to Claim 1, in which the cavitation is ensured by at least one hydrodynamic injector (5), the jet of which is arranged at an angle to the surface of the water to be treated, said water being contained in a tank (1), or by any other system of cavitation, characterised in that the water thus cavitated during a time depending on the volume to be treated is passed on into at least one photonic reactivation vessel (VI) equipped with at least one photonic impulsion tube or device (IV), the characteristics of which as regards spectrum, power, frequency and minimum time of emission are adjusted to the volume of water to be treated, to the way in which the water treated is to be used as well as to parameters, in the case of live substrates, linked with the individuality of said substrate.

3. Process according to Claim 2, characterised in that use is made of a cavitation tank (1) produced from an electrically isolating material such as polyester.

4. Process according to Claims 1 and 2, making use of the cavitation tank according to Claim 3, characterised in that cavitation tank (1) comprises two parts (2) and (3), one of which is intended for preliminary decantation of the water while the other is intended for its cavitation, the water levels being regulated and/or the water transfer between each of parts (2) and (3) being ensured, for example, by a pump (16), whereby the water level in the cavitation zone is set in relation to each outlet of the hydrodynamic injector with, for example a level contact (15).

5. Process according to Claims 1 and 2, characterised in that hydrodynamic injector (5) is fed in closed circuit subject to pressure in relation to the cavitation tank, for example by a hydraulic pump (4).

6. Process according to Claims 1 and 2, characterised in that it comprises the recovery of the flocculates such as may arise due to the treatment of certain waters after their use, by means of a hydraulic or mechanical system arranged in the cavitation tank.

7. Process according to Claim 2 comprising a cavitation tank (1) characterised in that the temperature of the water contained in said tank is regulated at a controllable level.

8. Process according to Claim 7, characterised in that the water to be treated is preheated and its temperature is maintained thermostatically by regulated addition of cold water.

9. Process according to Claim 2, characterised in that use is made of a photonic reactivation vessel (VI) made from an electrically insulating material such as glass fibre.

10. Process according to Claims 1 and 2, characterised in that the photonic reactivation of the water is ensured in several successive reactivation vessels (10) and (11) subject to transfer of the water from one to the other, making it possible to bring about a prereactivation stage (10) and then a photonic reactivation stage (11) prior to using the treated water for the application in question.

11. Process according to Claim 10, characterised in that the water contained in prereactivation vessel or vessels (10) is derived from cavitation tank (1) and has been previously subjected to a hydrodynamic cavitation treatment.

12. Process according to Claim 11, characterised in that transfer of the water from the cavitation tank is ensured for example by hydraulic pump (9) for prereactivation vessel (10) and then by gravity with the other photonic reactivation vessels (11) according to a regulated system based on the consumption of treated water and comprising pneumatic valves, check valves, level contacts as well as a return overflow in each prereactivation and reactivation vessel.

13. Process according to one of the preceding claims, characterised in that the water treated by hydrodynamic cavitation and by photonic reactivation is passed on into at least one basin (13) with a view to using it for immersion baths of the human or animal body and/or is passed on after use for recycling into cavitation tank (1) or predecantation vessel (2), for example by means of a pump (17) actuated after opening a valve (18) and after expiry of the bath time.

14. Process according to one of the preceding claims, characterised in that the entire operational and treatment cycle is sequenced from an electric panel with timed relays thus activating, from a programming system (programmable clock or microprocessor) the various components of the circuit for the treatment of water (pumps, valves ...).

15. Process according to one of the preceding claims, characterised in that starting with the photonic reactivation stage the hydraulic circuit consists solely of electrically insulating materials.

16. Process according to Claims 1 and 2 in which each cavitation tank (1) is equipped with a hydrodynamic injector (5) and each reactivation vessel (10) and (11) is equipped with at least one photonic tube (II), characterised in that the energy actuation is reinforced by other energy emission systems such as at least one ultrasonic generator, the frequency and impulse spectrum of which are so selected as to harmonise with the vibration spectra of the hydrodynamic injector and/or of the photonic tubes so as to promote the rate of vibration energy transfer in the water to be treated.

17. Process according to one of the preceding claims, characterised in that the water treated by hydrodynamic cavitation and by photonic reactivation is passed on, either in a vapourizing device or in an exposure table (subject or substance to be treated not in contact with the water) either in an immersion device or in an outlet (VII) for localised treatment making it possible to treat either live substrates (human, animal, vegetal) with applications in the spheres of medicine, biotechnology, agriculture and aesthetics, or inert substrates (solid, liquid or vapours).

# Fig 1

Entrée eau

Sortie eau traitée

Partie A  :  CAVITATION

Partie B  :  REACTIVATION

EP 0 437 502 B1

Fig 2

EP 0 437 502 B1